# EUROPEAN PATENT APPLICATION

(11) **EP 0 860 768 A1**
(43) Date of publication of application: **26.08.1998**
(21) Application number: 97102917.8
(22) Date of filing: 21.02.1997
(51) Int. Cl.: G06F 3/12

(54) **Drawing processor and drawing processing method**

(71) Applicant: FUJI XEROX CO., LTD., Minato-ku, Tokyo (JP)
(72) Inventor: Hayashi, Kazuto, c/o Fuji Xerox Co., Ltd., Nakai-machi, Ashigarakami-gun, Kanagawa (JP); Yamashita, Ichiro, c/o Fuji Xerox Co., Ltd, Nakai-machi, Ashigarakami-gun, Kanagawa (JP); Fuse, Tohru, c/o Fuji Xerox Co., Ltd., Nakai-machi, Ashigarakami-gun, Kanagawa (JP); Kawamtoto, Koushi, c/o Fuji Xerox Co., Ltd., Nakai-machi, Ashigarakami-gun, Kanagawa (JP)
(74) Representative: Grünecker, Kinkeldey, Stockmair & Schwanhäusser Anwaltssozietät

(57) **Abstract**

A drawing area allocation section 13 allocates a drawing area to be processed by a plurality of drawing instruction processing sections 10, to the drawing instruction processing sections 10 in the form of a strip-shaped area. A drawing instruction issue section 14 issues a drawing instruction for drawing a trapezoidal area which extends across the plurality of strip-shaped drawing areas. A drawing instruction transfer section 16 simultaneously transfers a plurality of drawing instructions to the plurality of drawing instruction processing sections 10 in a packaged manner through a communications path 17. The drawing instruction processing section 10 prepares drawing data according to the drawing instruction with regard to a corresponding drawing area. The thus prepared drawing data are written into local memory devices, and image data is produced from the drawing data.

## Description

### BACKGROUND OF THE INVENTION

### 1. Field of the Invention

The present invention relates to an apparatus and a method that quickly convert; e.g., vectors of a page-description language (PDL) and coded graphical expressions, into graphical expressions suitable for a raster output device. More particularly, the present invention relates to an apparatus and a method that are capable of efficiently distributing a converting operation into drawing elements when a plurality of drawing elements are employed.

### 2. Description of the Related Art

In one conventional system, data in the form of a PDL such as Interpress (Trademark of Xerox Corporation in the United States) or Postscript (Trademark of Adobe Systems Corporation in the United States) is received, and the thus-received PDL data is output to a printer using a raster output device; e.g., a page printer. In such a system, it takes much too long to convert the PDL data into data which is suitable for a raster output device (this conversion processing will be hereinafter simply referred to as an "imaging operation"). As a result of this, a problem arises particularly in a system which outputs to a high-speed page printer. For example, there has already been released a high-speed color printer having a capacity of producing printed output of 40 pages or more per min. In contrast, it takes about ten seconds or more for a system to carry out imaging operations, and some systems require several minutes. Therefore, it has been impossible for an expensive high-speed printer to utilize its capability fully.

Various ideas, particularly ideas utilizing parallel processing, have been disclosed in order to quickly carry out imaging operations which have posed a problem for the high-speed drawing systems. One example of the techniques in which input data for a plurality of pages are subjected to parallel-processing page by page, is disclosed in Unexamined Japanese Patent Application No. Hei-6-67822. Another technique is disclosed in; e.g., Unexamined Japanese Patent Application No. Hei-4-170686. According to this technique, an area to be drawn corresponding to one page, is split into smaller rectangular areas. The thus-split rectangular areas are then subjected to parallel filling operations. The former technique faces a problem that it is impossible to quickly carry out imaging operations of data for a small number of pages. For the latter technique, if a "picture" which imposes a heavy load on a drawing apparatus; for example, a very complicated small graphic, is pasted onto a part of one page, only the load imposed on the drawing apparatus for processing the graphic-pasted area becomes large. As a result, the effect of speeding up the processing of the overall system cannot be obtained.

There are special techniques in which smaller drawing areas obtained as a result of the dividing of a drawing area, are allocated to local memory devices of parallel processors so that the parallel processors can carry out filling of the smaller drawing areas. One example of such special techniques is a technique in which a drawing area is divided on a scanning-line-by-scanning-line basis, and the thus-divided drawing areas are allocated to a plurality of processors inconsecutively. This example is disclosed in; e.g., Unexamined Japanese Patent Application No. Hei-1-318174. In the conventional example, a "raster-graphics-processing instruction" (i.e., an instruction for instructing a processor to draw a predetermined pattern) is sequentially allocated to a plurality of parallel processors. The parallel processor itself executes a "drawing instruction " (i.e., an instruction for instructing the processor to fill a scanning line in a predetermined manner) which is obtained for each scanning line as a result of execution of the raster-graphics-processing instruction. The parallel processor then writes the result of execution of the drawing instruction into its local memory device (if the scanning line is allocated to itself). Alternatively, the result is transferred to another parallel processor. Upon receipt of the drawing instruction, the parallel processor to which that scanning line is allocated, writes filling data into its local memory device.

The scanning line accounts for a very small area in the case of a high-resolution raster output device. For example, the scanning line accounts for an area as small as about 0.04 mm with; e.g., a 600 dpi resolution. For ordinary graphics or documents, it is rare to use such a narrow line heavily. In so many cases, it is necessary to fill an area spreading across a plurality of scanning lines when drawing respective ordinary graphics or documents. Therefore, drawing operations associated with each drawing object are effectively executed in parallel as a result of execution of a filling operation on a scanning-line-by-scanning-line basis using a plurality of processors.

In the conventional example, the "drawing instruction" (i.e., an instruction for filling a designated area on a scanning-line-by-scanning-line basis) is transferred to parallel processors which perform operations on a scanning-line-by-scanning-line basis). As a result, a traffic volume of a system increases, which in turn makes it difficult to quickly transfer the instruction. In the end, the performance of the parallel processor cannot be utilized sufficiently.

The previously-described conventional system has a function of producing a drawing instruction (i.e., an instruction for designating an area of a local bit map to be filled) in parallel through a plurality of parallel processors. However, the system is not provided with a mechanism for retaining a filling order, and hence it is necessary to transfer an instruction for designating a drawing area, through the processors in good order. If an instruction for designating a long drawing area in the direction of the scanning line (e.g., an instruction for designating a line in the direction of the scanning line) is included in a set of drawing instructions, the processor in charge of filling a bit map corresponding to that drawing instruction brings about a bottleneck in processing (i.e., the other processors are also suspended for synchronization of communications), thereby hindering the effect of parallel processing from being improved.

### SUMMARY OF THE INVENTION

The present invention has been conceived in the light of the previously-described problems in the prior art, and therefore an object of the present invention is to provide a image processing apparatus and method that allows efficient parallel processing by efficiently distributing a load due to drawing operations into a plurality of drawing elements.

To achieve the object, according to a first aspect of the present invention, there is provided a drawing processor comprising: a plurality of drawing instruction processing means having local memory devices; divided area allocation means for allocating divided areas obtained by dividing a drawing area, to the plurality of drawing instruction processing means in an alternative way, so that the plurality of drawing instruction processing means carry out drawing processing of the allocated divided areas; drawing instruction generation means for generating a drawing instruction which enables drawing operations capable of covering several divided areas; means for transferring the drawing instruction to the plurality of drawing instruction processing means by one transfer operation; and means of producing a target image of the drawing instruction by recovering the results of the drawing operations executed by the plurality of drawing instruction processing means.

With this arrangement, an identical drawing instruction can be sent to the plurality of drawing instruction processing means, and the drawing instruction processing means execute drawing of their allocated divided areas. In consequence, the instructions to be sent to the drawing instruction processing means can be made identical, and the identical drawing instruction can be transferred to the plurality of drawing instruction processing means by one operation. As a result, transfer efficiency is improved, and improved efficiency of parallel processing can be sufficiently utilized.

In the above-described drawing processor, the divided areas may be linear or strip-shaped.

The divided areas may be cyclically allocated to the plurality of drawing instruction processing means in the direction in which the divided areas are arranged.

The divided area allocation means may store an allocation table and may allocate the divided areas to the plurality of drawing instruction processing means according to the allocation table.

Each of the plurality of drawing instruction processing means may be provided with a clip data storage area for retaining clip data.

The plurality of drawing instruction processing means may be connected to shared memory, and the local memory devices may constitute cache memory for the shared memory.

The drawing processor may be further provided with operation timing control means for shifting operation start timing of the plurality of drawing instruction processing means with respect to each other.

Each of the plurality of drawing instruction processing means may comprise means for storing an identifier for identifying a computing device which is to process operations of the drawing instruction processing means; means for comparing the identifier of the computing device which processes the operations of the drawing instruction processing means, with identifiers stored in the storage means; and means for requesting for reallocation of the computing devices depending on the result of comparison.

The results of the drawing operations performed by the plurality of drawing instruction processing means may be retained in the form of run-length data or trapezoid.

According to a second aspect of the present invention, there is provided a drawing processor comprising a plurality of drawing instruction processing means having local memory devices; divided area allocation means for allocating divided areas obtained by dividing a drawing area, to the plurality of drawing instruction processing means in an alternative way, so that the plurality of drawing instruction processing means carry out drawing processing of the allocated divided areas; means for outputting a drawing file; means for outputting a first drawing instruction after having received the drawing file; means for converting the first drawing instruction to a plurality of second drawing instructions which, as a whole, are equivalent to the first drawing instruction and enable processing operations capable of covering the plurality of divided areas; means of simultaneously transferring the plurality of second drawing instructions to the plurality of drawing instruction processing means by one transfer operation; means of producing target image data of the drawing instruction by recovering the results of the drawing operations executed by the plurality of drawing instruction processing means; and means for outputting a target image according to the target image data.

According to a third aspect of the present invention, there is provided a drawing processing method which uses a plurality of drawing instruction processing means having local memory devices, the method comprising the steps of: allocating divided areas obtained by dividing a drawing area, to the plurality of drawing instruction processing means in an alternative way, so that the plurality of drawing instruction processing means carry out drawing processing of the allocated divided areas; generating a drawing instruction which enables drawing operations capable of covering several divided areas; and producing a target image of the drawing instruction by recovering the results of the drawing operations executed by the plurality of drawing instruction processing means.

### BRIEF DESCRIPTION OF THE DRAWINGS

Fig. 1 is a block diagram illustrating the configuration of a drawing processor according one embodiment of the present invention;
Fig. 2 is a block diagram illustrating one example of a print system to which the present invention is applied;
Fig. 3 is a flowchart illustrating the flow of processing of a drawing instruction issue section 14;
Fig. 4 is a flowchart illustrating the flow of processing of a drawing instruction retaining section 15;
Fig. 5 is a flowchart illustrating the flow of processing of a drawing instruction transfer section 16;
Fig. 6 is a block diagram illustrating an example of configuration of a drawing instruction processing section 10;
Fig. 7 is a flowchart for explaining operations of the overall drawing instruction processing section 10;
Fig. 8 is a flowchart for explaining operations of a drawing code calculation section 104 provided in Fig. 6;
Fig. 9 is a schematic diagram illustrating another example of the configuration of the drawing code calculation section 104;
Fig. 10 is a flowchart for illustrating operations of a drawing code management section 105 provided in Fig. 6;
Fig. 11 is schematic representation illustrating an example of dividing of a drawing area in the embodiment provided in Fig. 1;
Fig 12 is a diagrammatic representation illustrating the relationship between a sample picture and a drawing instruction in the embodiment provided in Fig. 1;
Fig. 13 is a diagrammatic representation illustrating a state in which a drawing instruction provided in Fig. 12 is stored in a drawing instruction storage section 15;
Fig. 14 is a diagrammatic representation illustrating transfer of the drawing instruction provided in Fig. 12 to a drawing instruction processing section 10;
Fig. 15 is a diagrammatic representation illustrating a data structure of the drawing instruction used in the embodiment provided in Fig. 1;
Fig. 16 is a diagrammatic representation for explaining operations of one drawing instruction processing section of the embodiment provided in Fig. 1;
Fig. 17 is a diagrammatic representation illustrating a data structure of a drawing code used in the embodiment provided in Fig. 1;
Fig. 18 is a diagrammatic representation illustrating operations of one drawing instruction processing section used in the embodiment provided Fig. 1;
Fig. 19 is a diagrammatic representation for explaining an example of production of a composite image from results received from all the drawing instruction processing sections used in the embodiment provided in Fig. 1;
Fig. 20 is a timing chart for explaining operation timing of the drawing instruction processing sections;
Fig. 21 is a block diagram illustrating a modification of the embodiment provided in Fig. 1;
Fig. 22 is a timing chart illustrating the operation timing provided in Fig. 20;
Fig. 23 is a block diagram illustrating an improved example of the modification provided in Fig. 21;
Fig. 24 is a timing chart illustrating the operations of the improved example provided in Fig. 23;
Fig. 25 is a block diagram illustrating a modification of the present embodiment provided in Fig. 1;
Fig. 26 is a timing chart illustrating operations of the modification provided in Fig. 25; and
Fig. 27 is a block diagram illustrating a modification of the embodiment provided in Fig. 1.

### DETAILED DESCRIPTION OF THE PREFERRED EMBODIMENTS

Now, a description will be given in more detail of preferred embodiments of the present invention with reference to the accompanying drawings.

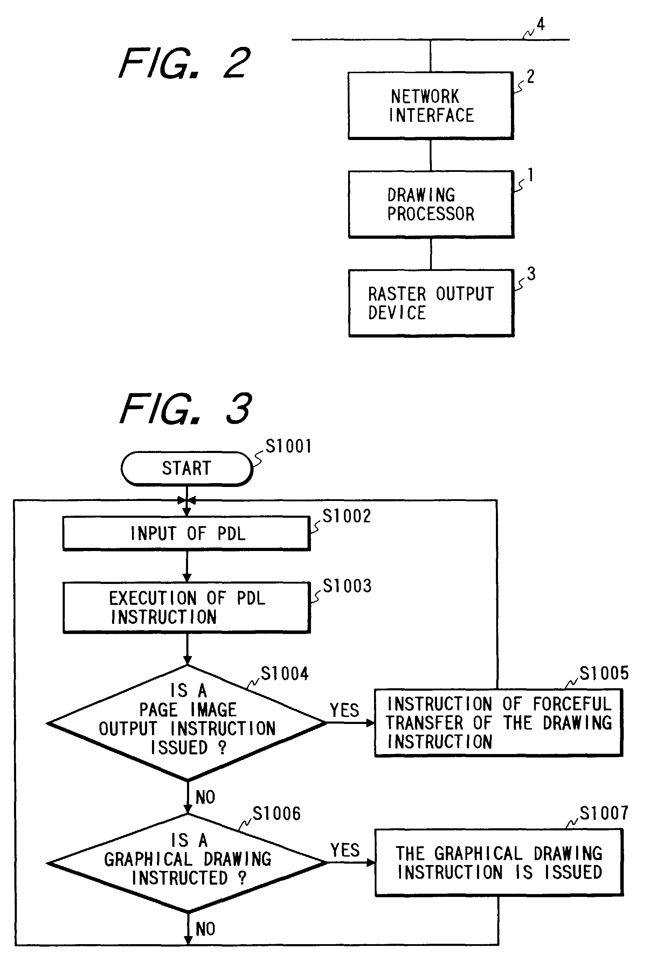

Fig. 2 is a block diagram illustrating the configuration of a print system to which one embodiment of the present invention is applied. The print system is comprised of a network interface 2, a drawing processor 1, and a raster output device 3. Character font disks (not shown) may be housed in the drawing processor 1 or may be provided outside of and connected to the drawing processor 1 so as to be able to make access to the drawing processor 1. The character font disks are not limited to a hard disk unit or an optical disk unit, but may be ROM (Read Only Memory) or RAM (Random Access Memory).

The raster output device 3 is a raster output device for actually outputting an image to an output media. For example, a printer such as a page printer or an ink-jet printer, or a display apparatus may be used as the raster output device.

The network interface 2 is a device for interfacing between the drawing processor 1 and other devices. Data such as PDL is input to the drawing processor 1 from another image processor and a computer through the network interface 2. The network interface 2 can be also formed for use in bidirectional communications. A communications path 4 connected to the network interface 2 is a medium device for network communications. For example, a medium which transmits an electrical signal such as a serial cable, a parallel cable, and a coaxial cable, an optical fiber, a radio transmitter, or an optical communications apparatus may be used as the communications path 4. The print system provided in Fig. 2 is based on the assumption that the drawing processor 1 is connected to another computer (not shown) through the network interface 2. It is easy for the persons skilled in the art to connect the drawing processor 1 to another computer through PCI or BUS and to apply the present invention to the print system having such a configuration.

The network interface 2 and the drawing processor 1 are combined together in a one-to-one relationship in Fig. 2. However, they are not required to be used in combination in one-to-one relationship. A plurality of network interfaces or raster output devices may be connected to one drawing processor, or a plurality of drawing processors may be connected to one raster output device. Further, a plurality of drawing processors and a plurality of raster output devices may be connected together.

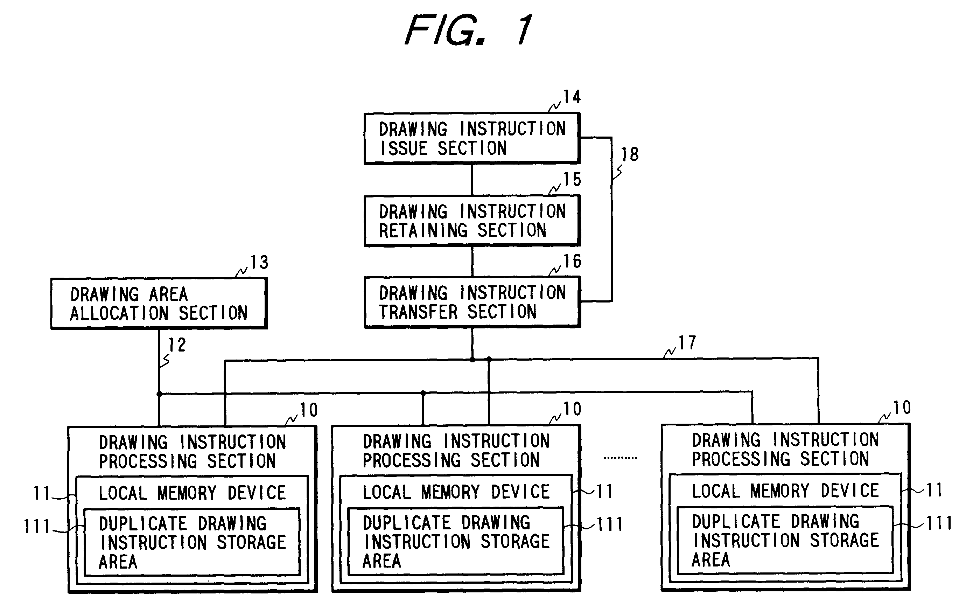

Fig. 1 is a block diagram illustrating one embodiment of the drawing processor 1 to which the present invention is applied. In the drawing, the plurality of drawing instruction processing sections 10, 10, ..., 10 respectively having local memory devices 11, 11, ..., 11 are connected to a divided drawing area allocation section 13 through a communications path 12. The divided drawing area allocation section 13 informs the respective drawing instruction processing sections 10 of divided drawing areas for which they are responsible. A drawing instruction issue section 14 receives an input such as PDL from an input device (not shown) and produces a drawing instruction by interpreting and converting the input, so that the drawing instruction is issued. The drawing instruction comprises designation of at least one type of drawing area which uses a trapezoid, a polygon, a convex drawing, or a drawing consisting of combination of a finite number of curves and a finite number of lines; and designation of at least one of a monochrome drawing color or a drawing color consisting of a plurality of colors.

The drawing instruction processing sections 10, 10, ..., 10 can be increased to as many sections as possible. In an extreme case, the number of the drawing instruction processing sections can be increased to more than 100. The suitable number of drawing instruction processing sections 10, 10, ..., 10 varies according to the resolution of an output device. Several to several tens of drawing instruction processing sections are suitable.

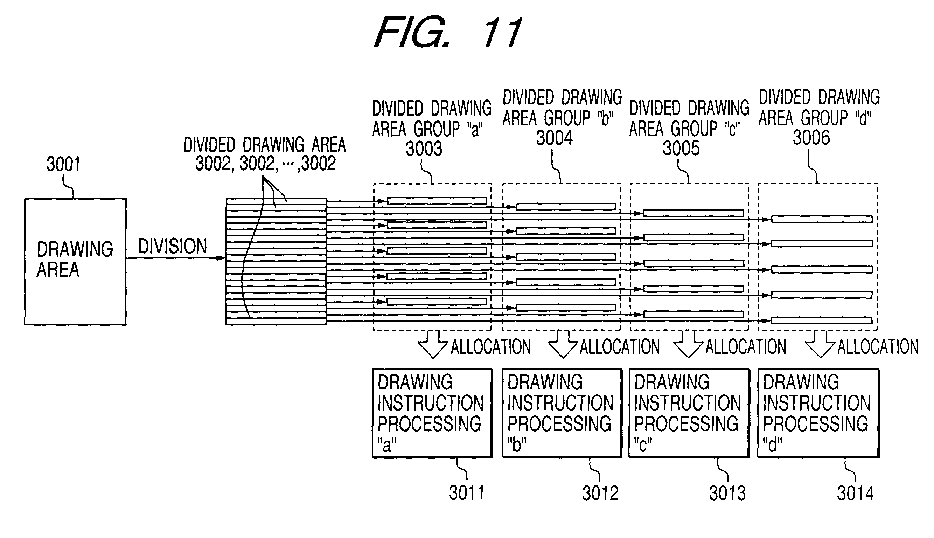

The drawing area allocation section 13 divides the drawing area into small strip-shaped areas and allocates the processing of the thus-divided strip-shaped drawing areas to the plurality of drawing instruction processing sections 10, 10, ..., 10. An example of division of the drawing area and of allocation of the processing to the drawing instruction processing sections 10, 10, ..., 10 will be described with reference to Fig. 11. A drawing area 3001 corresponding to an output page is divided into small strip-shaped areas in the direction of scanning, so that divided drawing areas 3002, 3002, ..., 3002 are virtually formed (processing to be actually performed includes setting of an memory address, allocation of required memory, and other indirect operations in many cases). Drawing operations of these divided drawing areas 3002, 3002, ..., 3002 are allocated to a plurality of drawing instruction processing sections. For explanation purposes, the drawing operations are allocated to four drawing instruction processing sections "a" to "d" (3011 to 3012). As a matter of course, any modifications of the drawing instruction processing sections fall within the scope of the present invention regardless of the number of the drawing instruction processing sections.

Divided drawing area groups "a" to "d" (3003 to 3006) are formed by inconsecutively selecting some of the divided drawing areas 3002, 3002, ..., 3002. Drawing operations are allocated to the drawing instruction processing sections "a" to "d." The divided drawing area groups "a" to "d" (3003 to 3006) are prepared on condition that; namely, the original drawing area is reconstructed from the divided drawing areas 3002, 3002, ..., 3002 by combining together all of them; and the divided drawing areas (3002, 3002, ..., 3002) included in the divided drawing area groups "a" to "d" (3003 - 3006) contains a few identical areas or do not contain identical areas at all. The sum of the divided drawing areas 3002, 3002, ..., 3002 included in each of the divided drawing area groups "a" to "d" becomes substantially equal. By virtue of these conditions, the effect of the present invention is enhanced much. Further, if the divided drawing areas 3002, 3002, ..., 3002 are cyclically or regularly to the drawing instruction processing sections "a" to "d," it is possible to inform the drawing instruction processing sections "a" to "d" (3011 to 3014) of allocation of the divided drawing areas to the drawing instruction processing sections, using a small amount of information. In the example provided in Fig. 11, the divided drawing areas are cyclically allocated to the four drawing instruction sections. The drawing area may be divided in millimeters or every several scanning lines. Division of the drawing area every scanning line, and division of the drawing area into a fraction of one or tens of scanning lines fall within the scope of the invention.

The drawing area allocation section 13 does not need to be connected constantly. The drawing area allocation section 13 is connected at least once when the number of drawing instruction processing sections 10, 10, ..., 10 is determined or when the drawing processor 1 is activated, whereupon allocation of the divided drawing areas is notified to the drawing instruction processing sections 10, 10, ..., 10. In such an extreme case, allocation of the divided drawing areas to the drawing instruction processing sections 10, 10, ..., 10 is determined when the number of drawing instruction processing sections 10, 10, ..., 10 has been determined. There is also available a method of connecting storage means (not shown) which stores the thus-determined information to the drawing instruction processing sections 10, 10, ..., 10 in order to notify the information to the drawing instruction processing sections 10, 10, ..., 10.

A drawing instruction retaining section 15 temporarily holds the drawing instructions issued from the drawing instruction issue section 14. When holding the drawing instructions, the drawing instruction retaining section 15 stores the drawing instructions in order in which they have been issued or stores them together with a combination of numbers which are designated by the drawing instruction issue section 14 the instant that the drawing instructions are issued. Depending on the configuration of the data of the drawing instruction, the numbers may be contained in the drawing instruction. In such a case, there is no particular need of combining together different numbers. The numbers designated by the drawing instruction issue section 14 are often numbers for designating the order of drawing. If the designation of a drawing is changed, or if the position or attribute of the drawing is changed, numbers to be designated will be changed also.

A drawing instruction transfer section 16 monitors at least either the amount of data on the drawing instructions stored in the drawing instruction retaining section 15 or numbers calculated from the stored drawing instructions. If a predetermined reference value or a reference value which is dynamically changed as a result of communication with the drawing instruction processing sections 10, 10, ..., 10 is exceeded, the excess of the reference value is notified to the drawing instruction retaining section 15. At least one or more drawing instructions stored in the drawing instruction retaining section 15 is transferred to the drawing instruction processing sections 10, 10, ..., 10 via the communications path 17. The drawing instruction processing sections 10, 10, ..., 10 store the thus-received the drawing instructions into duplicate drawing instruction storage areas 111, 111, ..., 111 within the local memory devices 11, 11, ..., 11. Then, the drawing instruction processing sections 10, 10, ..., 10 execute the drawing instructions. The drawing instruction transfer section 16 may be arranged so as to make an inquiry about whether or not the drawing instruction processing sections 10, 10, ..., 10 are ready for receiving the drawing instructions. Alternatively, the drawing instruction processing sections 10, 10, ..., 10 may be arranged so as to previously notify the drawing instruction transfer section 16 of the fact that they are ready for receiving the drawing instructions.

A control line 18 connecting between the drawing instruction issue section 14 and the drawing instruction transfer section 16 is to instruct the drawing instruction storage sections to forcefully transfer the drawing instructions stored therein to the drawing instruction processing sections 10, 10, ..., 10. This features is utilized; e.g., where it is necessary to complete an image page after drawing instructions for one page have been issued.

Fig. 3 is a flowchart related to the processing executed by the drawing instruction issue section 14. In the drawing, when having started operations (S1001), the drawing instruction issue section 14 reads PDL (S1002) and interprets it in order (S1003). When an instruction for outputting a page image is issued (S1004), an instruction for forcefully transferring drawing instructions is sent to the drawing instruction transfer section 16 (S1005). According to a PDL instruction which instructs issue of drawing instructions (S1006), the drawing instructions are issued (S1007).

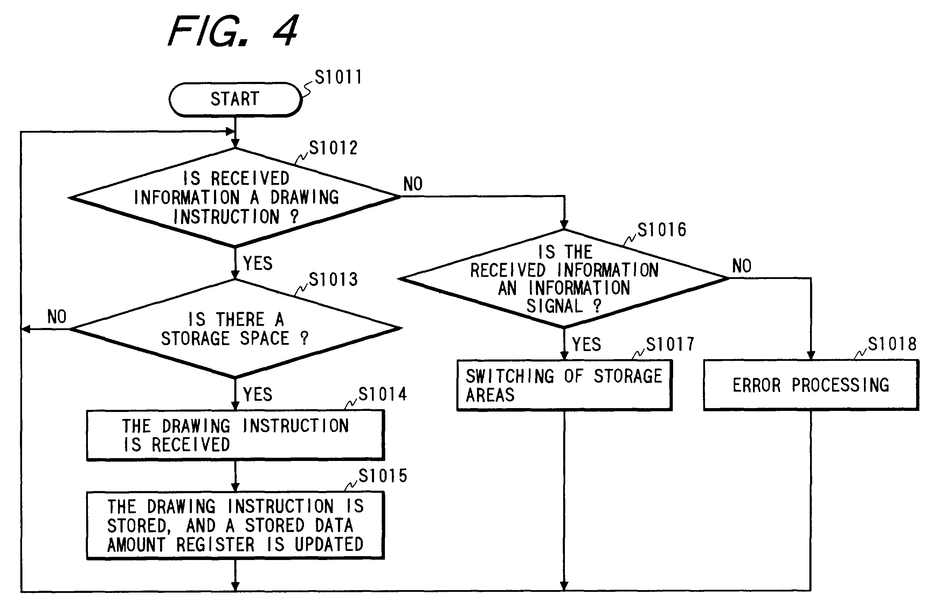

Fig. 4 is a flowchart related to the processing executed by the drawing instruction retaining section 15. In the drawing, if the received information is drawing instructions (S1011 and S1012), the drawing instruction retaining section 15 checks whether or not there is a storage space in the storage area (S1013) and receives the drawing instructions (S1014). The thus-received drawing instructions are stored, and a value of a stored data amount register is updated (S1015). In contrast, if the received information is not the drawing instructions but an information signal related to the commencement of transfer of the drawing instructions (S1016), the storage area will be switched (S1017). The switching of the storage area is intended to enable receiving of drawing instructions during a period over which the drawing instructions are transferred. If a sufficient storage area for storing drawing instructions is not ensured, the drawing instruction issue section 14 may be placed in a wait condition. If the received information is neither the drawing instructions nor the information signal, error processing will be executed (S1018).

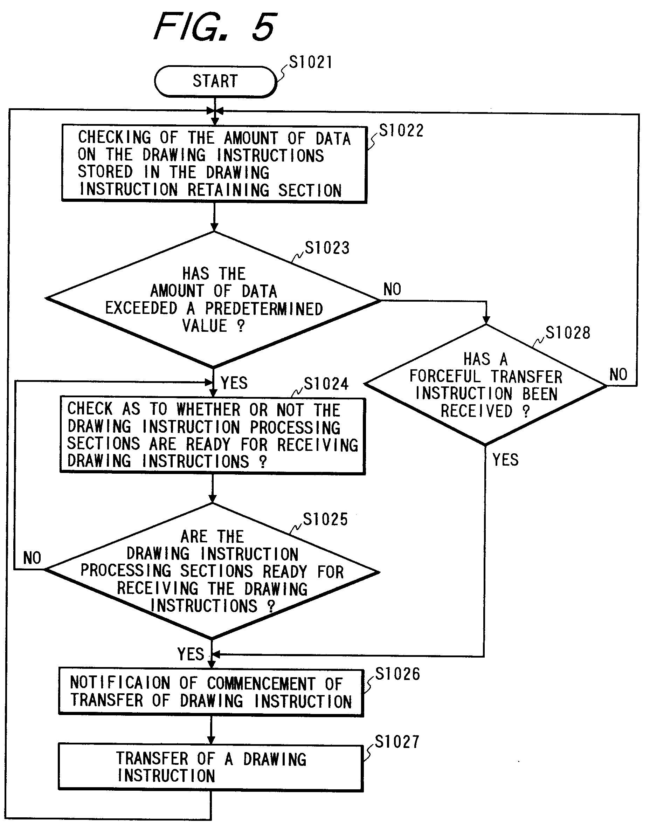

Fig. 5 is a flowchart related to the processing carried out by the drawing instruction transfer section 16. In the drawing, the drawing instruction transfer section 16 monitors the amount of data on the drawing instructions stored in the drawing instruction retaining section 15 (S1021 and S1022). If the amount of data exceeds a predetermined amount or a reference value calculated according to the state of the overall print system (S1023), the drawing instruction transfer section 16 checks whether or not the drawing instruction processing sections 10, 10, ..., 10 are ready for receiving drawing instructions (S1024). If it has been checked that the drawing instruction processing sections are in a state of readiness to receive the drawing instructions (S1025), the drawing instruction transfer section 16 notifies commencement of transfer of the drawing instructions to the drawing instruction retaining section 15 and the drawing instruction processing sections 10, 10, ..., 10. Subsequently, the drawing instructions stored in the drawing instruction retaining section 15 are transferred to the drawing instruction processing sections 10, 10, ..., 10 (S1027). Even if the amount of the data on the stored drawing instructions does not reach the reference value, the drawing instructions will be transferred by way of steps S1026 and S1027 where the drawing instruction transfer section 16 receives a forceful transmission instruction from the drawing instruction issue section 14 (S1028).

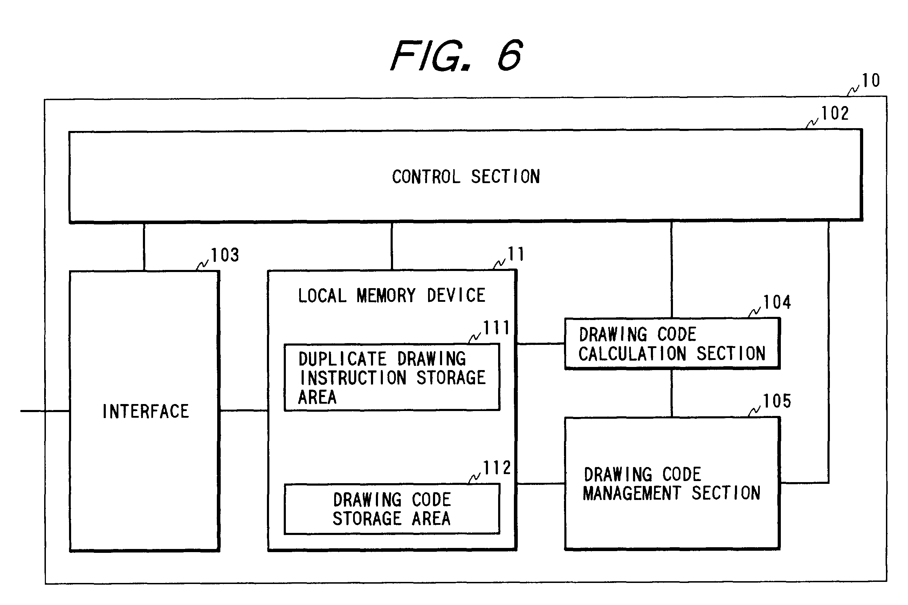

Fig. 6 is a block diagram illustrating an example of configuration of the drawing instruction processing section 10. In the drawing, the drawing instructions are written into the duplicate drawing instruction storage areas 111 of the local memory devices 11 through the interface 13. As a result of this, at least one of commencement or completion of writing operations, interruption, and receipt of another signal provides the way of the control section 102 instructing a drawing code calculation section 104 to operate. According to the instruction from the control section 102, the drawing code calculation section 104 fetches one or more drawing instructions stored in the duplicate drawing instruction storage areas 111 in order and processes the thus-fetched drawing instructions, whereby drawing codes are prepared.

The drawing code management section 105 receives the drawing codes output from the drawing code calculation section 104 and stores the thus-received drawing codes into the drawing code storage areas 111 within the local memory devices 11 in the order in which the drawing code management section 105 has received the drawing codes. Alternatively, the drawing code management section 105 manages the divided drawing areas after having divided them into further smaller areas. The thus-divided smaller drawing areas are collectively stored according to a drawing code relevant to those areas. Alternatively, drawing codes which may cause an overlap are retrieved before they are stored, and the thus-retrieved drawing codes are subjected to some calculations (e.g., transformation of a graphical expression which represents a drawing area or modification of color information), whereby effective drawing codes are restored or are further subjected to another processing. Anyway, the drawing code is stored in a drawing code storage area 112 using at least one of the aforementioned methods.

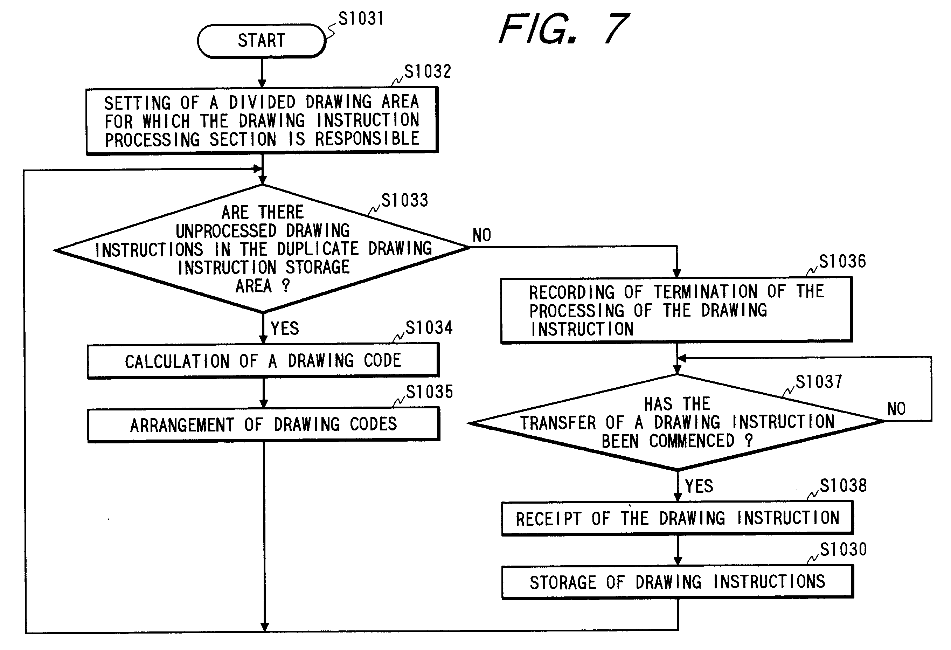

Fig. 7 is a flowchart illustrating the flow of processing performed by the drawing instruction processing section 10. In the drawing, before commencing operations, the drawing instruction processing section 10 reads information about a method of dividing a drawing area and a method of allocating the thus-divided drawing areas to the drawing instruction processing sections. The thus-read information is stored in a storage device (not shown) provided in the drawing instruction processing section 10 (S1031 and S1032). The information about the dividing method is information about the fact that the small strip-shaped drawing areas are divided on a scanning-line-by-scanning-line basis or every several scanning lines. Further, the information about allocation of the divided drawing areas is information about the number of the strip-shaped divided drawing area from top which is the starting line of the drawing area allocated to the drawing instruction processing section as well as about the interval between the strip-shaped divided drawing areas allocated to the drawing instruction processing section. Alternatively, the information about the allocation of the divided drawing areas is information such as a table which provides allocation of areas to the drawing instruction processing section, or a table which provides descriptions of a function for generating a number or initial values of the function and allocation values. As described above, the information about the dividing method and the divided drawing area allocation method is at least one form of information about various designation methods.

First, the drawing instruction processing section checks whether or not the drawing instructions have been transferred. If the drawing instructions have already been transferred, the drawing instruction processing section receives the drawing instruction and stores the thus-received drawing instruction into the duplicate drawing instruction storage area 111 (S1037, S1038, and S1030). If there are unprocessed drawing instructions in the duplicate drawing instruction storage area 111 (S1033), the drawing codes are calculated from the unprocessed drawing instructions (S1034). The thus-calculated drawing codes are transferred to the drawing code management section 105. The drawing codes are classified and stored in the drawing code storage area 112 (S1035). If unprocessed drawing instructions have been processed all, completion of processing of the drawing instructions is recorded in a drawing instruction processing status storage section (not shown) within the drawing instruction processing section (S1036). This drawing instruction processing status storage section may be provided in the storage area within the local memory device 111 or; e.g., in the drawing instruction transfer section 16 outside of the drawing instruction processing section 10.

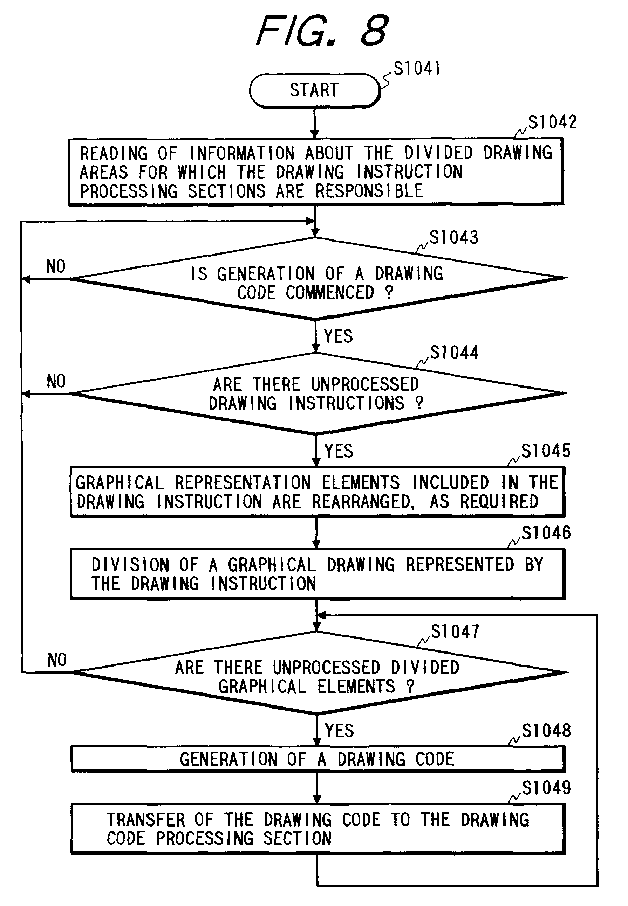

Fig. 8 is a flowchart illustrating the flow of processing performed by the drawing code calculation section 104. In Fig. 8, when the drawing code calculation section (reference numeral 14 in Fig. 6) is activated, the drawing code calculation section 104 reads, at least once, information about the divided drawing areas for which the drawing instruction processing sections are responsible. The information may be information that has been transferred from the drawing area allocation section (reference numeral 13 in Fig. 1) connected to the drawing code calculation section and has been stored in the drawing code calculation section, or information read from a storage section (e.g., ROM, a disk unit, or a magnetic tape unit) which has received data from the drawing code allocation section (reference numeral 13 in Fig. 1) while having temporarily been connected to the same (S1041 and S1042). When the commencement of processing of the drawing instructions is instructed (S1043), preprocessing with regard to the drawing areas represented by the drawing instructions is carried out as required (S1045) during a period over which unprocessed drawing instructions are present (S1044). A drawing pattern specified by the drawing instruction is divided (S1046), and drawing codes are produced (S1048) during a period over which drawing elements of the divided drawing areas are present (S1047). The thus-produced drawing codes are sent to the drawing code management section (reference numeral 15 in Fig. 6).

It is possible to check whether or not the drawing instruction is relevant to the drawing area for which the drawing instruction processing section is responsible (it is possible to easily determine whether or not the drawing instruction is relevant to the drawing area for which the drawing instruction processing section is responsible by forming a circumscribing rectangle of the drawing area represented by the drawing instruction) before step S1405 or in a step in which the drawing area is divided into drawing elements. Further, it is also possible to determine whether or not the drawing instruction is relevant to the drawing area for which the drawing instruction processing section is responsible, in a step in which the drawing code is generated.

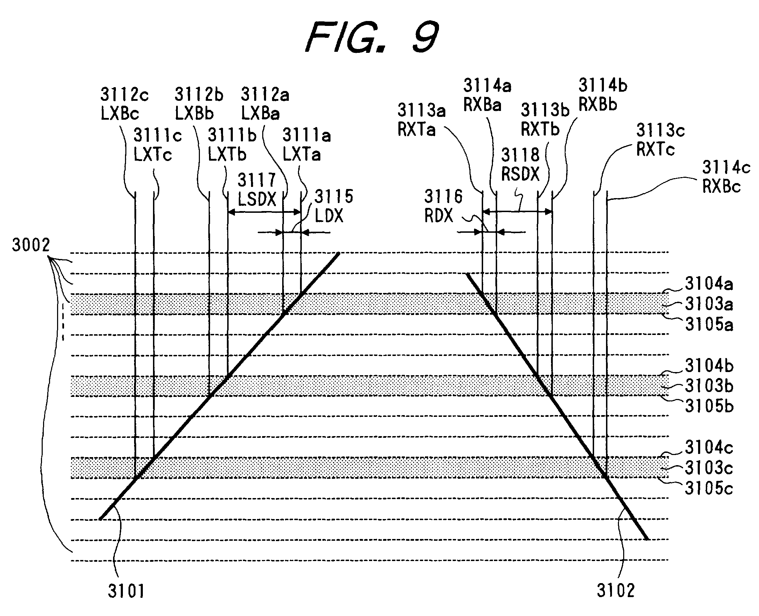

It is also possible to take a method of generating a drawing code with regard to only the drawing area for which the drawing instruction processing section is responsible. Fig. 9 illustrates one example of this method. This drawing illustrates an example in which the drawing instruction is a set of line segments constituting the right and left boundaries of the area. For brevity, the direction of scanning is set in a horizontal direction of the drawing in Fig. 9. The following descriptions are based on the assumption that the X-axis is set in the rightward direction of the drawing, and the Y-axis is set in the direction orthogonal to the X-axis.

With regard to an area between a left boundary line 3101 and a right boundary line 3102, an explanation will be given of an example in which it is easy to calculate a drawing code with regard to only areas located in divided drawing areas 3013a, 3103b, and 3103c for which the drawing instruction processing section is responsible, referring to Fig. 9. First, the area between the right and left boundary lines 3101 and 3102 is examined from top, whereby the divided drawing area 3103a whose drawing code is to be calculated first is found in the divided drawing area for which the drawing instruction processing section is responsible. It is possible to easily find the divided drawing area 3103a by comparing the upper Y-coordinate values of the right and left boundary lines 3101 and 3102 with the Y-coordinate value of the divided drawing area for which the drawing instruction processing section is responsible. If the divided drawing area 3103a whose drawing code is to be calculated has been found first, X-coordinate values LXTa 3111a and RXTa 3113a of intersections between an upper boundary line 3104a positioned above the divided drawing area 3103a and the right and left boundary lines 3101 and 3102 are obtained. Further, X-coordinate values LXBa 3112a and RXBa 3114a of intersections between a lower boundary line 3105a and the right and left boundary lines 3101 and 3102 are then obtained. Subsequently, LDX 3115 is obtained by calculation of (LXBa - LXTa), and RDX 3116 is obtained by calculation of (RXBa - RXTa). If the divided drawing areas are cyclically allocated as in the case provided in Fig. 9, LSDX 3117 and RSDX 3118 are obtained as (N x LDX) and (N x RDX), respectively (N is a period of allocation of the divided drawing areas). From LXTb = LXTa + LSDX, RXTb = RXTa + RXTa, LXBb = LXBa + RSDX, RXBb = RXBa + RSDX, ..., it is possible to sequentially calculate the drawing codes with regard to only the divided drawing areas for which the drawing instruction processing sections are responsible. Even if the allocation of the divided drawing areas is not periodic, equivalent calculations can be executed with use of a table related to allocation of divided drawing areas, interval of allocation of the divided drawing areas, and a table related to the correspondence between the interval of allocation of the divided drawing areas and LSDX 3117 and RSDX 3118 (they may be calculated). Even if the right and left boundary lines are not linear, similar calculations can be executed so long as the boundary lines are curves which are functionally represented.

Since specific calculation of a drawing code is dependent on the format of the drawing code, only an example of calculation of a drawing code having a simple format will be provided. For example, if the drawing code is a trapezoidal expression, it can be represented as (LXTa, RXTa, LXBa, RXBa, Y) (Y is a Y-coordinate value corresponding to a divided drawing area 3003a). In contrast, if the drawing code is a run-length expression, it can be represented as ((LXTa + LXBa)/ 2, (RXTa + RXBa)/ 2, Y). Specific calculation of these types of drawing code is largely dependent on the format of expression of each of the drawing codes. Therefore, particular explanation of the calculation of these drawing codes will be omitted here.

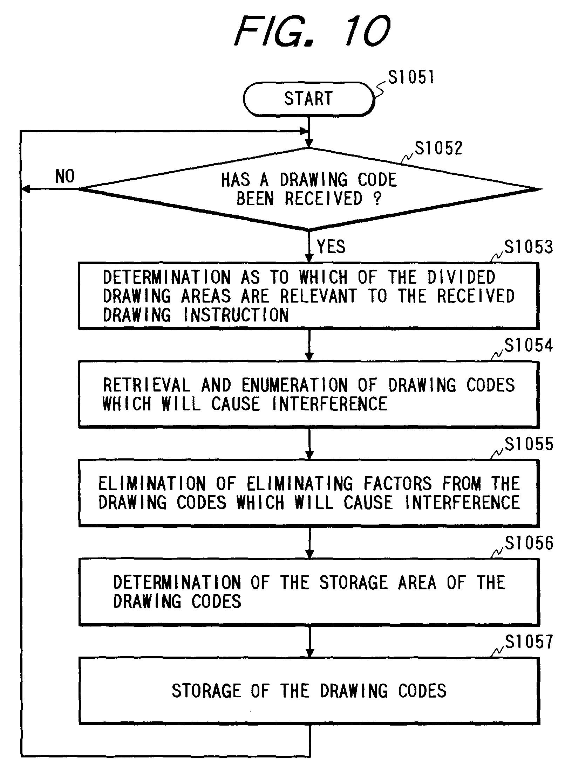

Fig. 10 is a flowchart showing one example of the flow of the processing performed by the drawing code management section. When a drawing code is received (S1051 and S1052), the drawing code management section checks whether or not the received drawing code is relevant to a plurality of divided drawing areas for which the drawing processing sections are responsible (S1053). Of the drawing codes stored in the storage sections corresponding to the divided drawing areas for which the drawing instruction processing sections are responsible, the drawing codes that will interfere with the received drawing codes; e.g., overlap each other, are retrieved and enumerated (S1054). Interfering factors are eliminated from the drawing codes which will cause interference (because the drawing area represented by the interfering drawing code is overwritten by the received drawing code) (S1055). An area in which the received drawing code is stored is determined, and the received drawing code is stored in that area (S1056 and S1057). It is also possible to process a plurality of drawing codes collectively through the previously-described processing procedures after they have been received. Further, it is also possible to process the drawing codes without complete elimination of interference.

The operation of the print system according to the present embodiment will be described with reference to examples.

As has been already described, Fig. 11 exemplarily illustrates a method of dividing a drawing area and allocation of the thus-divided drawing areas to divided-drawing instruction processing sections "a" to "d" (3011 to 3014). In the following descriptions, a drawing area is divided into smaller drawing areas on a scanning-line-by-scanning-line basis, and the thus-divided smaller drawing areas are cyclically allocated to the divided-drawing instruction processing sections "a" to "d" (3011 to 3014) one by one in order. For brevity, the present example will be described on the assumption that there are provided four drawing instruction processing sections. However, the number of drawing instruction processing sections is not limited to four. Further, for brevity, the drawing area is divided into scanning lines. However, as previously described, the drawing area may be divided every several scanning lines or several tens scanning lines.

After the configuration of the drawing processor 1 has been determined, the divided drawing area allocation section 13 performs a dividing operation and an allocating operation. The divided drawing instruction processing sections 10, 10,..., 10 are notified of results of the dividing and allocating operations [the divided-drawing instruction processing sections "a" to "d" (3011 to 3014), are notified of the results in the descriptions of the present example]. The scope of examples of the present embodiment includes inclusion of the designation of the drawing instruction processing sections into a drawing instruction as a result of advanced notification of allocation of the divided drawing areas to the drawing instruction issue section 14, the drawing instruction transfer section 16, and the drawing instruction retaining section 15.

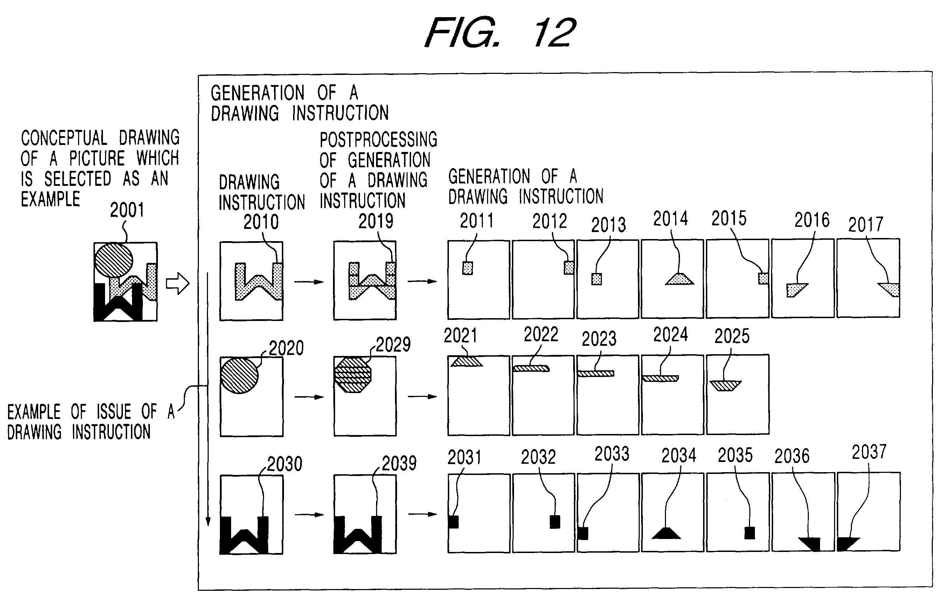

Fig. 12 is a diagrammatic representation for explaining a sample "picture" used in the descriptions and issue of a drawing instruction when this sample drawing is drawn. Although the drawing instruction is described using a trapezoidal drawing area expression for brevity purposes, the drawing area is not limited to the trapezoidal shape. In practice, the drawing instruction is comprised of coordinates and an attribute value, or of a set of numerical data such as a pointer with respect to another data structure. Throughout the following descriptions, a drawing code is represented by a trapezoidal graphical expression for simplifying the descriptions.

In drawing a "picture" like a picture 2001 as provided in Fig. 12, drawing instructions are issued in order of; e.g., 2010, 2020, 2030, on the basis of PDL data. The drawing instruction issue section 14 converts these drawing instructions into drawing instructions to be executed by the drawing instruction processing sections 10, 10, ..., 10. It is possible to use a drawing instruction format employed in the drawing instructions directly as the format of the drawing instruction. Alternately, as the format of the drawing instruction, there may be used; for example, a polygonal format formed by making curved portions linear, a set of line segments (which may include curves on some occasions) which are not parallel to the direction of the scanning line and are opposite to each other, trapezoidal expressions, rectangular expressions, a run-length expression having its starting and end points or length in the direction of the scanning line specified, or another commonly known expression to designate an area. Any one or more of the above-described formats can be used. For brevity, the descriptions will be continued on the assumption that the drawing instruction is in the form of a trapezoidal expression.

The drawing instructions 2010, 2020, and 2030 are processed one by one, whereby drawing instructions 2011 to 2017, 2021 to 2025, and 2031 to 2037 are issued. There are several known methods for drawing a trapezoid. A simple method of drawing a trapezoid is that virtual lines are drawn from the apex of a polygon in parallel to the scanning line so as to divide the polygon. In the example, the drawing instructions 2011 to 2017, 2021 to 2025, and 2031 to 2037 that express trapezoids, are generated according to this simple method. The drawing instruction 2020 comprising curves is an example obtained by use of a method by which a polygon is formed by previously preparing polygonal approximations of curves. The thus-issued drawing instructions are stored in the drawing instruction retaining section 15 in order.

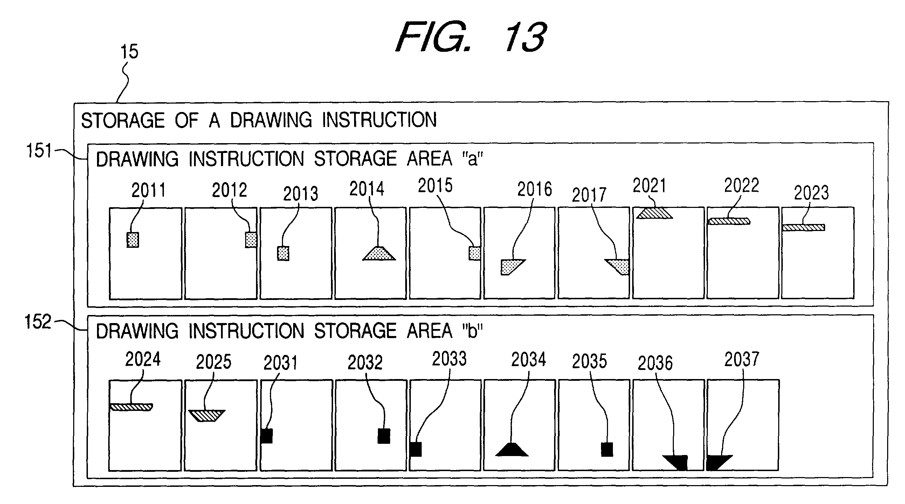

Fig. 13 illustrates a state in which the drawing instructions issued in the step provided in Fig. 12 are stored. In this drawing, there is provided a storage area for collectively storing the drawing instructions in groups of 10 instructions. The number of instructions to be grouped and the number of storage areas may be instructed by the drawing instruction transfer section, or may be previously determined.

The drawing instructions are stored in order; namely, 2021 to 2025 and 2031 to 2037. When a predetermined amount of drawing instructions which has previously been determined by the capacity of a drawing instruction receiving buffers of the drawing instruction processing sections 10, 10, ...., 10 and other factors, has been stored, or when a numerical value calculated from the drawing instructions stored in the drawing instruction retaining section 15 (e.g., a total rough estimate of areas of the drawing areas represented by the drawing instructions, a total of heights of the trapezoids, or other various numerical values obtained by calculation) is detected by the drawing instruction transfer section 16, the transfer of the drawing instructions is commenced. Prior to the transfer of the drawing instructions, the designation of the storage areas of the drawing instructions is also switched. In the example provided in Fig. 13, the drawing instructions are stored in groups of 10 drawing instructions and are transferred after the ten drawing instructions have been stored.

In the example provided in Fig. 13, the drawing instructions are stored in order in the drawing instruction storage area "a" (151) at the outset. After a drawing instruction 2023 has been stored in the drawing instruction storage area "a" (151), the storage area is switched from the drawing instruction storage area "a" (151) to a drawing instruction storage area "b" (152) under control of the drawing instruction transfer section 16. Then, the storage of the drawing instructions is continued. Although two storage areas for storing drawing instructions are provided in Fig. 13, the number of the storage areas is not particularly limited to two. Similarly, the present invention can be applied to a system provided with one storage area or three storage areas or more.

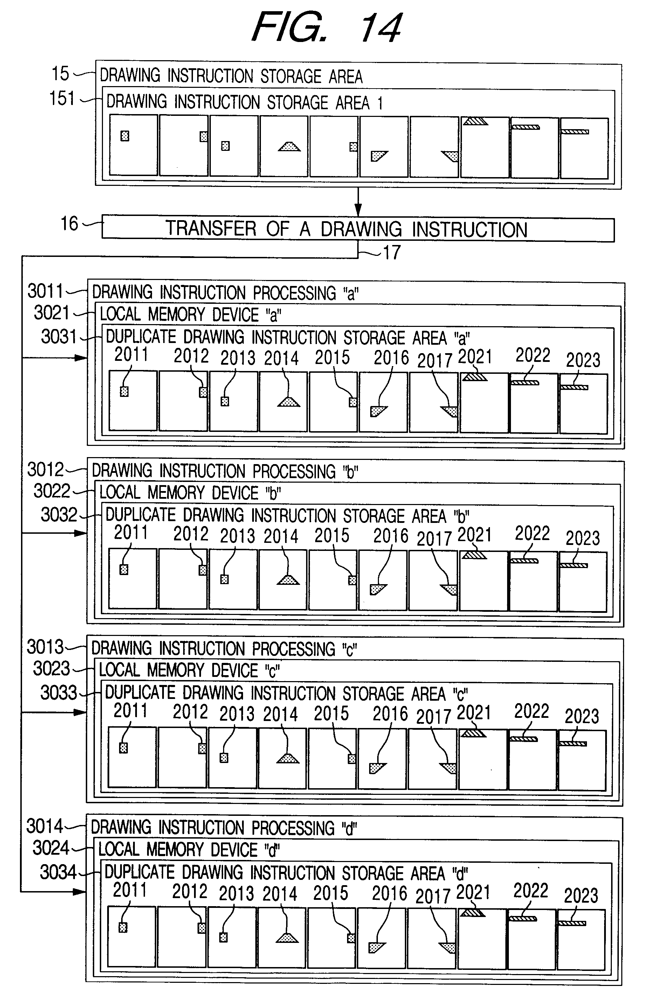

Fig. 14 illustrates transfer of the drawing instructions 2011 to 2017 and 2021 to 2023 from the drawing instruction storage area "a" (151). On Fig. 14, the drawing instruction transfer section 16 transfer the drawing instructions 2011 to 2017 and 2021 to 2023 to the plurality of drawing instruction processing sections "a" to "d" (3011 to 3014) from the drawing instruction storage area "a" (151) within the drawing instruction retaining section 151, by one operation. The drawing instruction processing sections "a" to "d" (3011 to 3014) store the thus-received drawing instructions into duplicated drawing instruction storage areas "a" to "d" (3031 to 3034) within local memory devices "a" to "d" (3021 to 3024). In the example provided in Fig. 14, the drawing instructions 2011 to 2017 and 2021 to 2023 are all stored in the duplicated drawing instruction storage sections "a" to "d" (3031 to 3034) within the drawing instruction processing sections "a" to "d" (3011 to 3014). Alternatively, the drawing instruction processing sections "a" to "d" (3011 to 3014) may be provided with a determination section for determining whether or not the received drawing instructions 2011 to 2017 and 2021 to 2023 are relevant to the split drawing areas for which the drawing instruction processing sections are responsible. With this arrangement, it becomes easy to selectively store only the drawing instructions that are relevant to the divided drawing areas for which the drawing instruction processing sections are responsible, in the duplicated drawing instruction storage areas "a" to "d" (3031 to 3034).

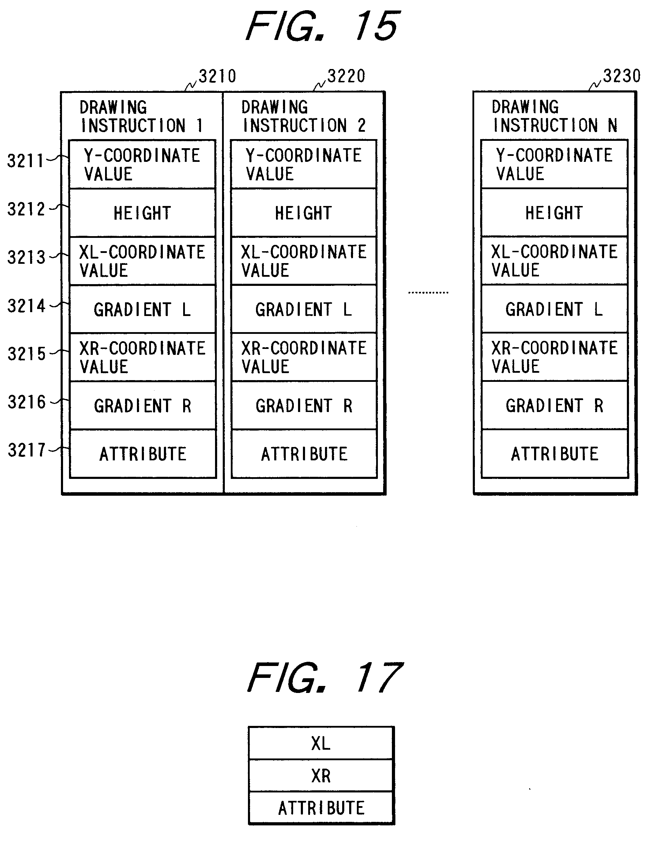

Fig. 15 illustrates one example of the data structure of the exemplary drawing instruction used in the descriptions. The direction of the scanning line is defined as an X-coordinate, whereas the direction orthogonal to the X-coordinate is defined as the Y-coordinate. A Y-coordinate value 3211 designates the Y-axis coordinate of the upper end of an exemplary drawing instruction 3210 which represents a trapezoid. A height of 3212 designates the height of that trapezoid. An XL-coordinate 3213 designates an X coordinate of the left end of the upper side of the trapezoid. An XR-coordinate 3215 designates the X-coordinate of the upper right end of the upper side of the trapezoid. A gradient L3214 designates the inclination of the left side of the trapezoid and designates the extent in which the X-coordinate changes as the Y-coordinate changes downward by one. Further, a gradient R3216 designates the inclination of the right side of the trapezoid in the same way as does the L3214. An attribute value area stores; e.g., values designating colors used in painting the drawing area or designating patterns.

After the drawing instructions 2011 to 2017 and 2021 to 2023 stored in the drawing instruction storage area "a" (151) have been transferred to the drawing instruction processing sections "a" to "d" (3011 to 3014), the drawing instruction processing sections execute processing of the drawing instructions 2011 to 2017 and 2021 to 2023. The processing of the drawing instructions will now be described with reference to the operation of one of the drawing instruction processing sections.

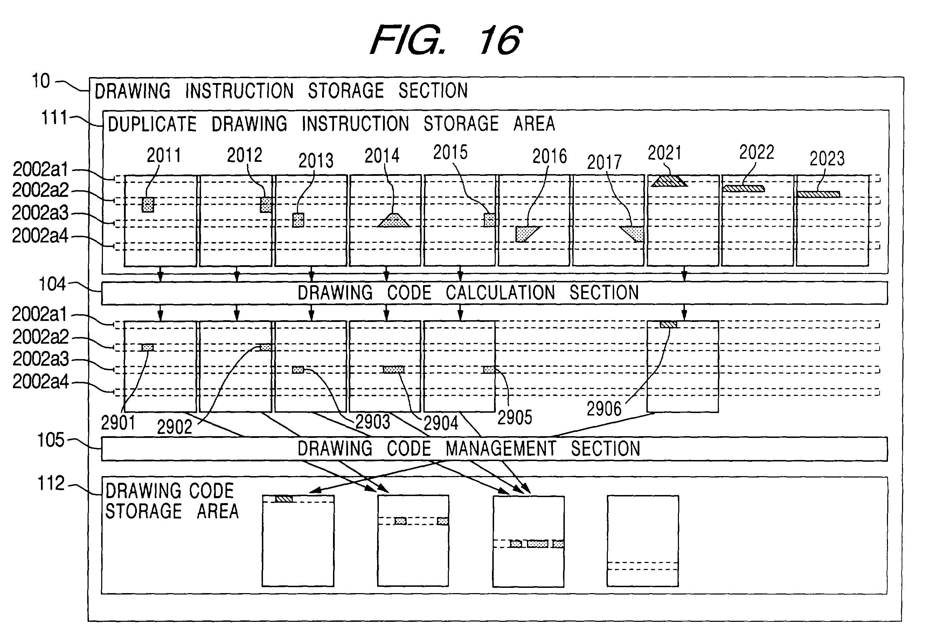

Fig. 16 is a schematic representation for explaining the operation of the drawing instruction processing section "a" (3011). For brevity, the example will be described on the assumption that the data format of a drawing code is run-length data per scanning line. Various expressions such as rectangular expressions, trapezoidal expressions, expressions comprised of a set of line segments, or functional expressions, may be used as the drawing code. In this example, run-length data is employed as an example of the method of representing the drawing area for brevity. The instruction processing section "a" (3011) calculates a drawing code from the drawing instruction stored in the duplicated drawing instruction storage section "a" (3031), with regard to the divided drawing area for which the instruction processing section is responsible. Since the calculation method has already been described, its explanation will be omitted here. There are also simple methods; namely, a method of calculating the drawing code with regard to only the divided drawing area for which the instruction processing section is responsible for; and a method of selecting only a drawing code related to the divided drawing area for which the instruction processing section is responsible, after having calculated the drawing codes in order on a scanning-line-by-scanning-line basis.

The drawing instruction processing sections "a" to "d" (3011 to 3013) fetch information about the divided drawing areas for which they are responsible, from the drawing area allocating section 13, or from the storage means received values from the drawing area allocating section 13, at least once when the drawing instructions processing sections in charge of the divided drawing areas have been activated, or when the processing is commenced.

Drawing codes 2901 to 2906 are calculated one after another by the drawing code calculation section 104 with regard to the drawing instructions 2011 to 2017 and 2021 to 2023 stored in the duplicated drawing instruction storage sections "a" to "d" (3031 to 3034). Depending on the drawing instructions, drawing code related to divided drawing areas 2002a1 to 2002a4 for which they are responsible, are not generated. This may be detected in a step in which the drawing code is calculated, a step in which the drawing instruction has been received, a step in which the drawing instruction is stored in the duplicated drawing code storage section, or after the drawing code has been calculated. In other words, by means of at least one of these methods, only the drawing code related to the divided drawing area for which it is responsible, is stored in the drawing code storage area. Unless a drawing code irrelevant to the divided drawing area for which it is responsible, affects the other drawing codes adversely, it may be stored in the drawing code storage area 112.

The drawing codes calculated by the drawing code calculation section 104 are sent, one after another, to the drawing code management section 105. The drawing code management section 105 catalogs and arranges the drawing codes according to the divided drawing areas for which they are responsible. Various types of management can be conceived; for example, a method of storing the drawing codes in the order in which they are calculated, a method of assigning numerals associated with the order of calculation to the drawing codes and rearranging the drawing codes on the basis of the coordinates, or a method of retrieving overlapping drawing codes and deleting the drawing codes to be overcoated. Fig. 16 schematically illustrates an example in which the drawing codes are managed after having been grouped together according to the divided drawing areas 2002a1, 2002a2, 2002a3, and 2002a4, and the drawing codes which store overlaps are deleted.

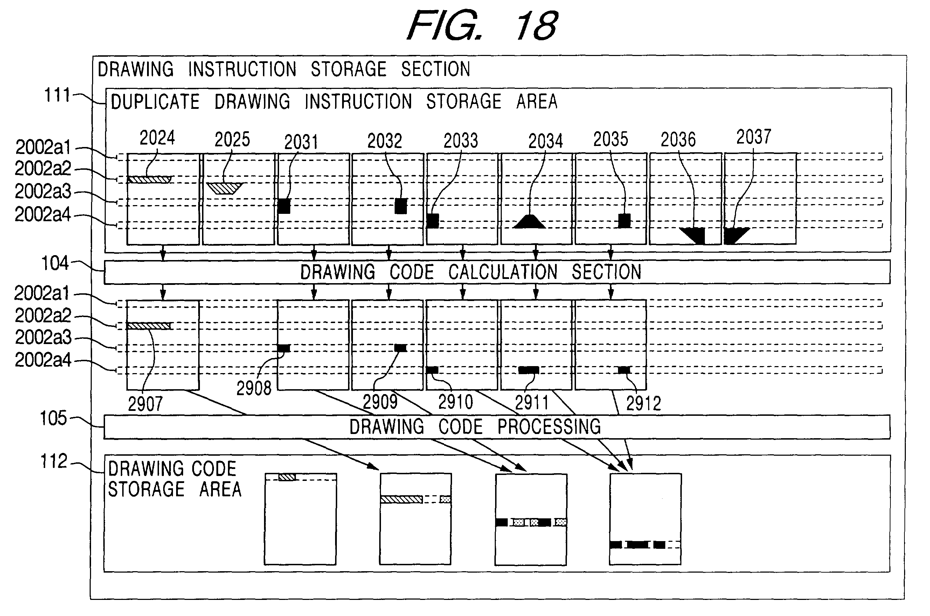

Fig. 17 illustrates one example of the data structure of an illustrative drawing code. XL denotes coordinates of a left side of the drawing area represented by the drawing code, whereas XR denotes coordinates of the right side of the same. The attribute section can store a value taken over from the drawing instruction.

After having finished performing processing with regard to the drawing instructions 2011 to 2017 and 2021 to 2023 stored in the duplicated drawing instruction storage area 3031, the drawing instruction processing section "a" (3011) writes, into storage means inside or outside of the drawing instruction processing section 3011, a value representing the fact that the processing has been completed. Upon direct or indirect reference to this, the drawing instruction transfer section 16 can acknowledge the completion of the processing of each drawing instruction processing section. After having acknowledged that the processing of all the drawing instruction processing sections 3011, 3012, 3013, and 3014 has been completed, and that they are ready for receiving drawing instructions, the drawing instruction transfer section 16 transfers the next drawing instruction that has satisfied the transfer requirements to each of the drawing instruction processing sections. In this example, the second drawing instruction is transferred when the drawing instruction transfer section 16 is forcefully ordered to perform transfer operations as a result of completion of the drawing instruction.

Fig. 18 illustrates operations of the drawing instruction processing section "a" (3011) after second transfer of the drawing instruction has been completed. The drawing instruction processing section "a" (3011) operates, in principle, in the same manner as does in the example explained with reference to Fig. 16. There are overlaps between the drawing code already stored in the drawing code storage area 112 and the calculated drawing code. With regard to these overlaps, overlapping drawing codes are retrieved from the drawing codes stored in the drawing code storage area 112 in the example of the present embodiment. Further, the areas to be deleted as a result of overlapping are deleted by calculating drawing codes corresponding to these areas. A well-known efficient retrieving method may be used in retrieving the drawing codes. Alternatively, the drawing codes can be easily retrieved even if there are searched for all the drawing codes stored in the storage area of the corresponding divided drawing area. With regard to calculation of the drawing code, there are various methods of calculating a drawing code even in the case of sets of line segments including trapezoids or curves. It is particularly easy to calculate a drawing code using a method such as the run-length data employed in the present embodiment. A drawing code can be calculated through several types of processing such as modification of XR and XL coordinates, the dividing of data, or the deletion of data.

With regard to steps after the step in which the drawing instruction and the operations of the drawing instruction processing have been completed, various processing procedures are conceivable. Various system configurations are conceivable; for example, the drawing instruction processing sections being respectively connected to multiplexers (not shown) through a communications line (not shown) or to shared memory through a communications path; or a central processing section (not shown) which collects data from each local memory device. Further, the following cases also fall within the scope of the present invention; namely, a case where each drawing instruction processing section outputs a drawing code; a case where a drawing code is output after having been converted into a compressed image expression having a different format; and a case where raster data is produced from the drawing code and is then output.

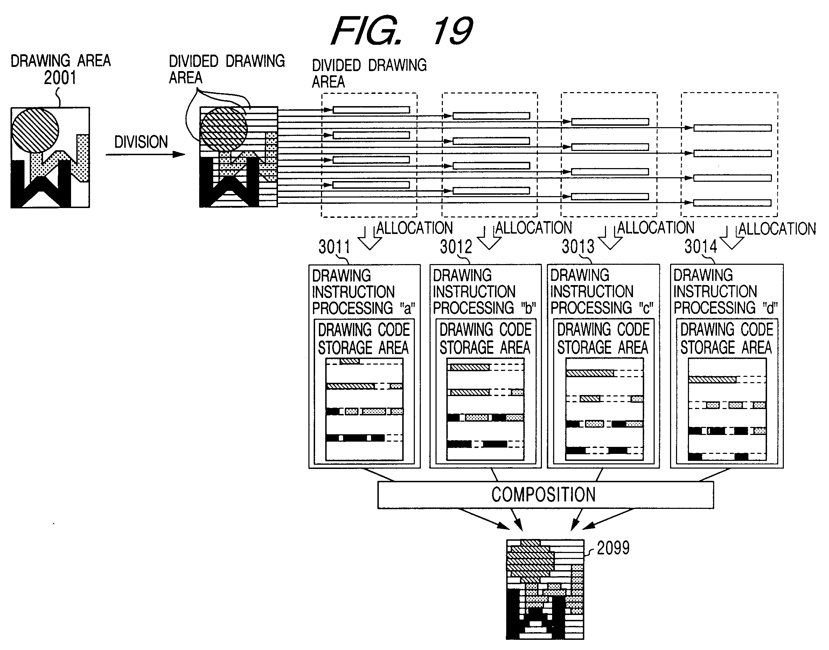

Fig. 19 diagrammatically a picture 2099 represented by the drawing codes collected from the drawing instruction processing sections "a" to "d" (3011 to 3014).

In the present embodiment, loads imposed on the drawing instruction processing section become theoretically equal to each other by dividing the drawing area into smaller drawing areas, and by allocating the divided drawing areas to the drawing instruction sections. To practically distribute the loads to the drawing instruction sections equally, a plurality of drawing instructions are transferred at one time. As a result, the probability that the loads will be evenly allocated to the drawing instruction sections increases, and the drawing instructions can be efficiently processed in parallel. Eventually, a high-speed drawing processor can be realized.

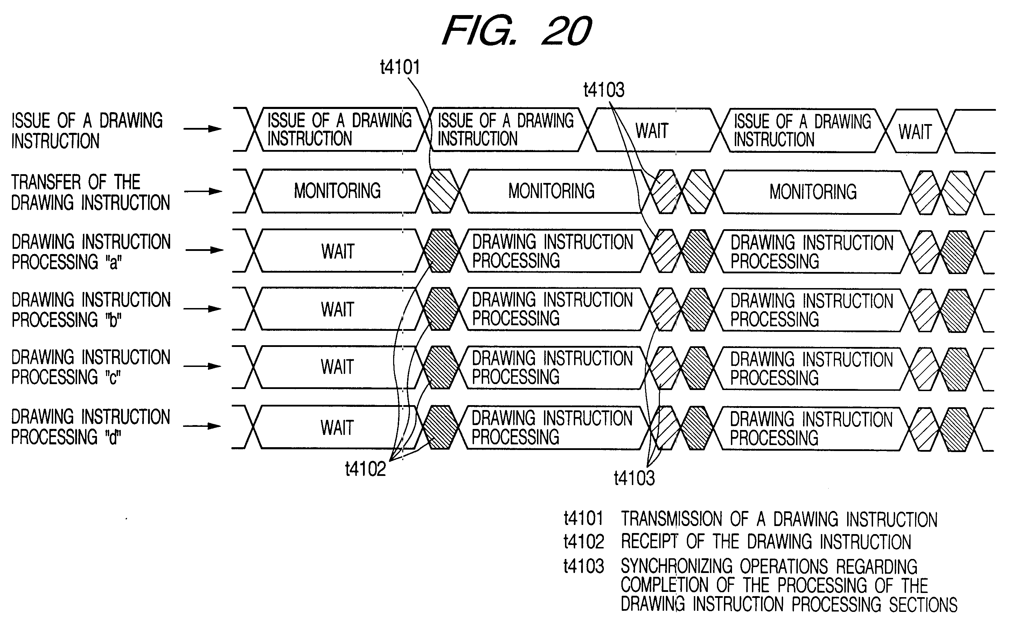

Fig. 20 illustrates an example of operation timing of the print system. The drawing instruction transfer section carries out a monitoring operation until the drawing instruction issue section has issued a predetermined amount of drawing instructions. When the predetermined amount has been achieved, the drawing instructions stored in the drawing instruction transfer section are transferred by one operation (t4101). The drawing instruction processing sections "a" to "d" receive the thus-transferred drawing instructions simultaneously (t4102). After the drawing instruction processing sections have finished processing the drawing instructions, synchronizing operations regarding completion of the processing are carried out (t4103). Then, other drawing instructions are transferred. As described above, the loads are evenly allocated to the drawing instruction processing sections. Since it is expected that processing periods 4104 required by the drawing instruction sections "a" to "d" will become substantially identical to each other, only a small period of time is required to carry out the synchronization processing.

If the drawing area is divided into small stripe-shaped areas, the adjacent stripe-shaped areas are substantially identical to each other in many cases. This fact is utilized in the present embodiment. To reduce slight differences between the adjacent strip-shaped areas, a plurality of drawing instructions are transferred simultaneously. In this way, drawings corresponding to the adjacent strip-shaped areas are substantially identical to each other, the drawing instruction processing sections perform substantially identical processing even if a plurality of drawing instructions are transferred simultaneously. As a result, it is expected that the drawing instruction processing sections will finish processing the operations at substantially the same time. This means that there is few wait time between the drawing instruction processing sections, and that the drawing instructions can be efficiently processed in parallel.

There is no substantial interruption between the drawing instruction processing sections. Therefore, execution and completion of the processing at substantially the same time are suitable for evenly distributing loads to the drawing instruction processing sections in the previous embodiment. However, if interruption occurs between operations of the drawing instruction processing sections, the above-described feature will present problems.

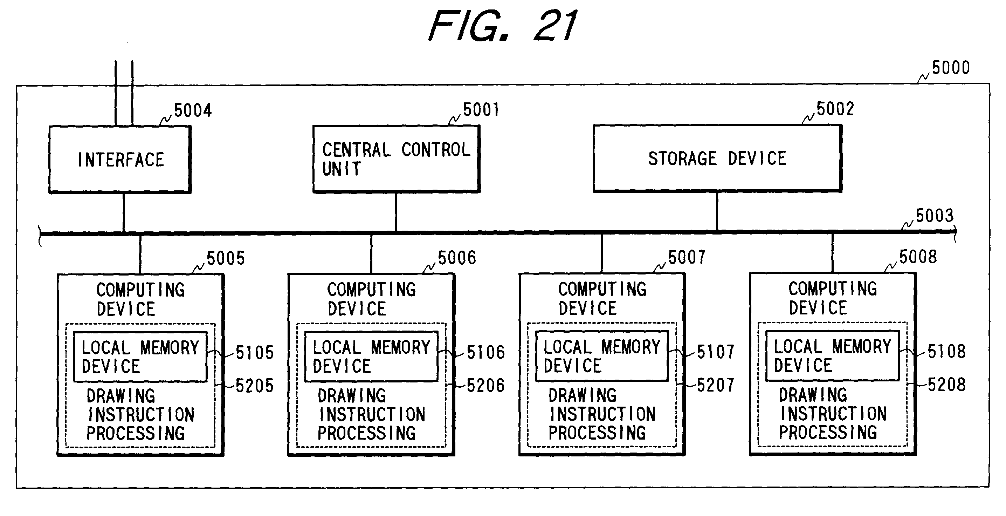

Fig. 21 illustrates an example in which the drawing instruction processing sections are connected to shared memory. Local memory devices of the drawing instruction processing sections are formed into a system that operates as cache memory which reflects a part of addresses of the shared memory. Such a system is popular in the field of a multiprocessor system. If the drawing instruction sections start to operate at the same time in such a system, they operate appropriately even in the system configuration as provided in the previous embodiment while access to memory is carried out within the local memory devices of the drawing instruction processing sections. However, if the amount of drawing codes to be stored increases, the amount of stored drawing codes exceeds the capacity of cache memory used as the local memory device. Resultantly, access to the shared memory is started.

On Fig. 21, computing devices 5005, ... 5008 are connected to a shared bus 5003 and shared memory 5002. The shared bus 5003 is connected to a central control device and an interface 5004. The computing devices 5001, ...., 5008 have local cache memory devices 5105, ..., 5108. The cache memory devices 5105, ..., 5008 constitute the local memory device, and software installed in the computing devices 5005, ..., 5008 constitutes the drawing instruction processing sections 5205, ..., 5208.

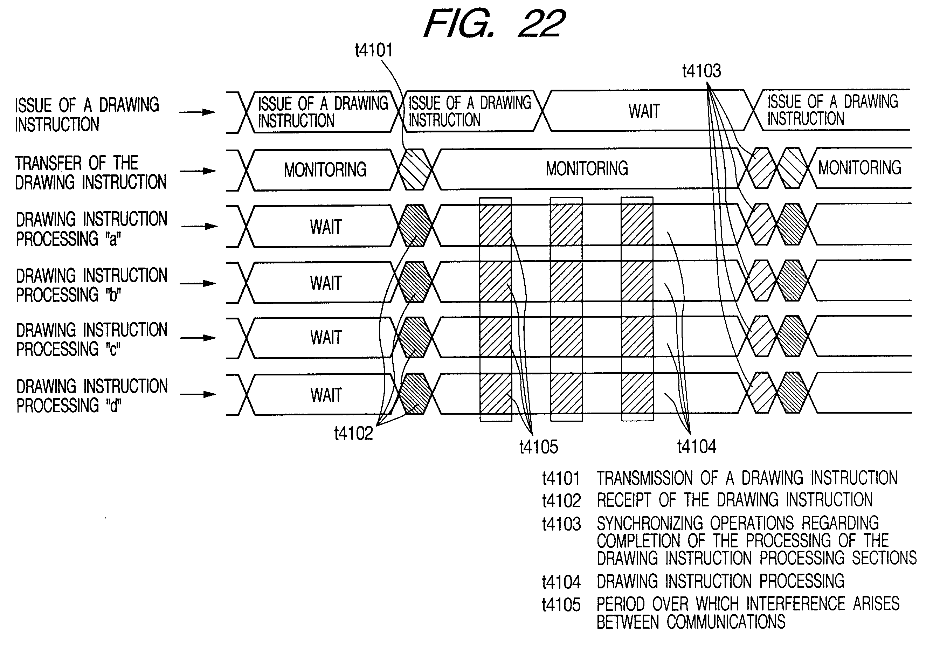

Fig. 22 illustrates a timing chart of operations of the drawing instruction processing sections having the configuration provided in Fig. 21. In this drawing, the central processing unit (the drawing instruction transfer section) 5001 transfers a drawing instruction (t4101), and the computing devices (the drawing instruction processing sections) 5105, ..., 5108 receive the drawing instruction simultaneously (t4102). The computing devices 5105, ..., 5108 execute drawing operations and make access to the shared memory, as required. As a result, interference may occur between requests for access (t4105). The interference results in extension of a period of time over which processing of the drawing instruction is completed. More specifically, it becomes impossible to obtain benefits resulting from an increase in the number of drawing instruction processing sections.

This problem can be ascribed to the fact that substantially identical drawing instructions are allocated to the drawing instruction processing sections by means of the methods of dividing the drawing area and of allocating the divided drawing areas to the drawing instruction processing sections. For this reason, the timing at which the number of drawing codes exceeds the capacity of the local memory device is very analogous to the timing at which the computing devices make access to the shared memory.

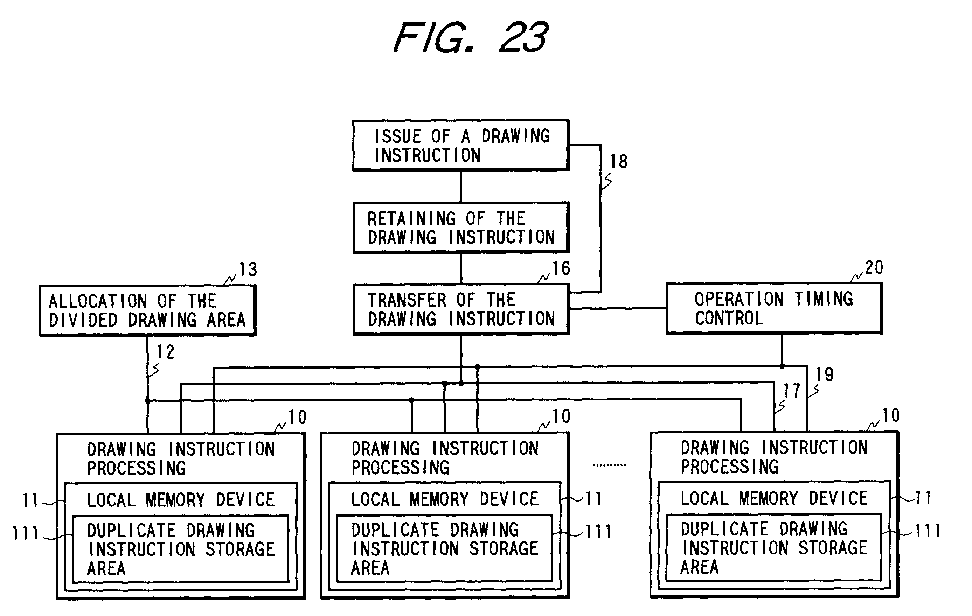

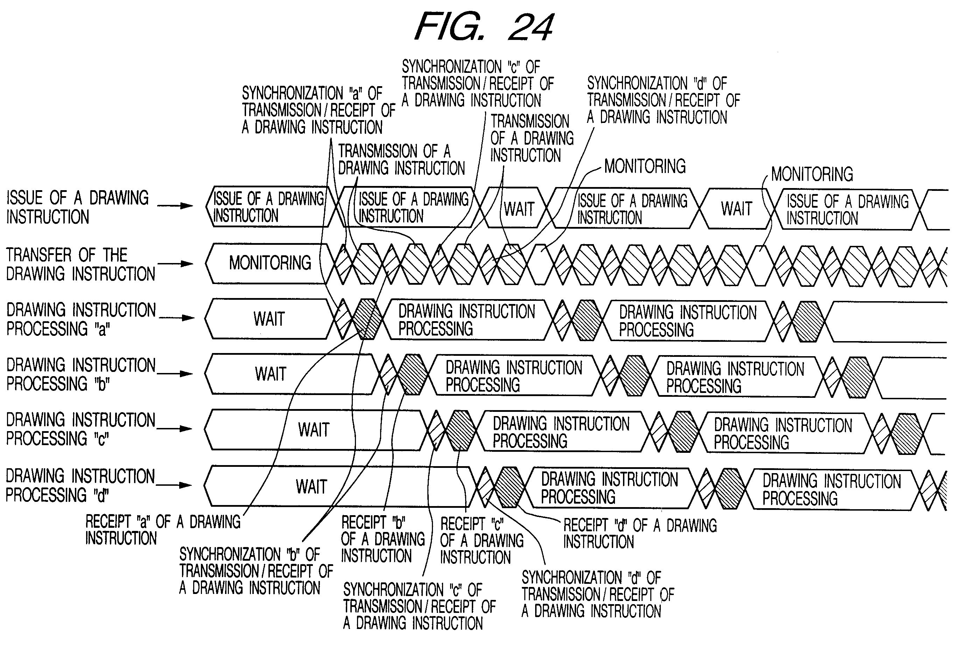

To prevent such a problem, the print system is provided with an operation order control section as provided in Fig. 23. Fig. 23 illustrates an example of the configuration of the embodiment in which the print system is provided with an operation timing control section 20. The operation timing control section 20 delays processing start time for each drawing instruction, on the basis of a numeral defined resulting from establishment of communications with the drawing instruction processing sections, a predetermined numeral, or a numeral calculated as required. Alternatively, the operation timing control section 20 delays timing at which the drawing code is monitored. An example of one method of easily realizing the operation timing control section 20 will be illustrated. The feature of the operation timing control section 20 can be implemented by transferring the drawing instruction to the drawing instruction processing sections in order. Fig. 24 illustrates operation timing of the print system in this case.

When a predetermined amount of drawing instruction has been stored, the drawing instruction transfer section commences transfer of the drawing instruction. At this time, the drawing instruction transfer section transfers the drawing instruction to the drawing instruction processing sections "a" to "d" in order in cooperation with the operation timing control section. Upon receipt of the drawing instruction, the drawing instruction processing sections operate according to the drawing instruction. As a result, the drawing instruction processing sections can commence operations at different timing. Further, it is possible to expect that the drawing instruction processing sections will process the common drawing instruction within a substantially identical period of time. For the later processing, the operation timing processing section can control the transfer of the drawing instruction each time. However, the timing at which each drawing instruction processing section has finished processing the drawing instruction delays in substantially the same way as does the timing at which the drawing instruction has previously been transferred. For this reason, with regard to the later processing, if the drawing instruction is transferred to the drawing instruction processing sections in the order in which the drawing instruction processing section has finished processing the drawing instruction, there will be obtained effects similar to those obtained as a result of the operation timing controls section constantly controlling the drawing instruction processing sections.

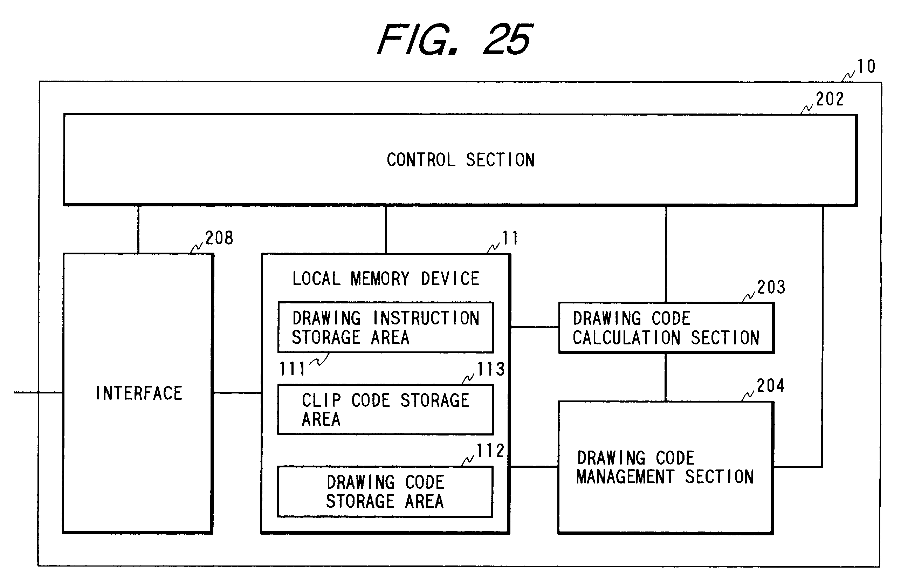

Fig. 25 illustrates the configuration of the drawing instruction processing section 10 of another embodiment. A clip code storage area 113 is further provided in the local memory devices. A clip code designates a clipping area which limits a drawable area. Clip information associated with a drawing area for which the drawing instruction processing section is responsible, is stored in the clip code storage area 113 according to a processing phase. The clip code may be transferred as a part of the drawing instruction or may be transferred separately from the drawing instruction.

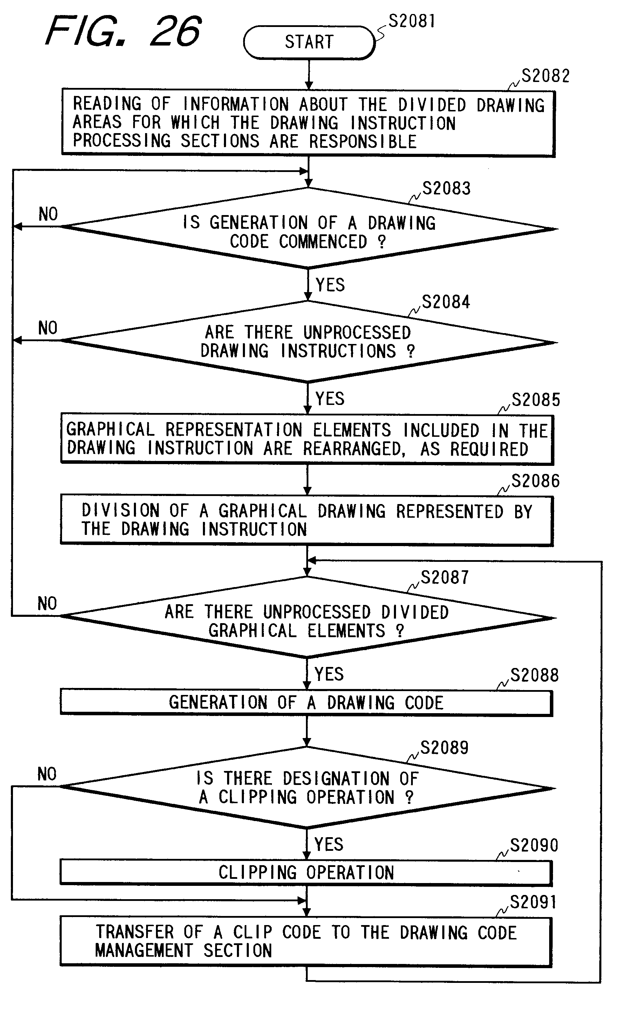

Fig. 26 is a flowchart illustrating the flow of processing of the drawing instruction processing section which includes clipping operations. There are no substantial differences between the processing from S2081 to S2087 and the processing in the previous embodiment. After a drawing code has been produced (S2088), the thus-produced drawing code is compared with clip data during the course of production if a clipping operation is designated (S2089). The clipping operation is carried out by correcting an area representation of the drawing code so as to fall within the drawing area represented by the clip data (S2090). A resultant clip code is then transferred to the drawing code management section (S2091). Methods of producing and transferring a clip code are not particularly limited. The clip code may be transferred from a clip data management section (not shown). Alternatively, it is easy for the persons skilled in the art to insert an instruction representing a clip code or an instruction for control the clip code, into the drawing instruction.

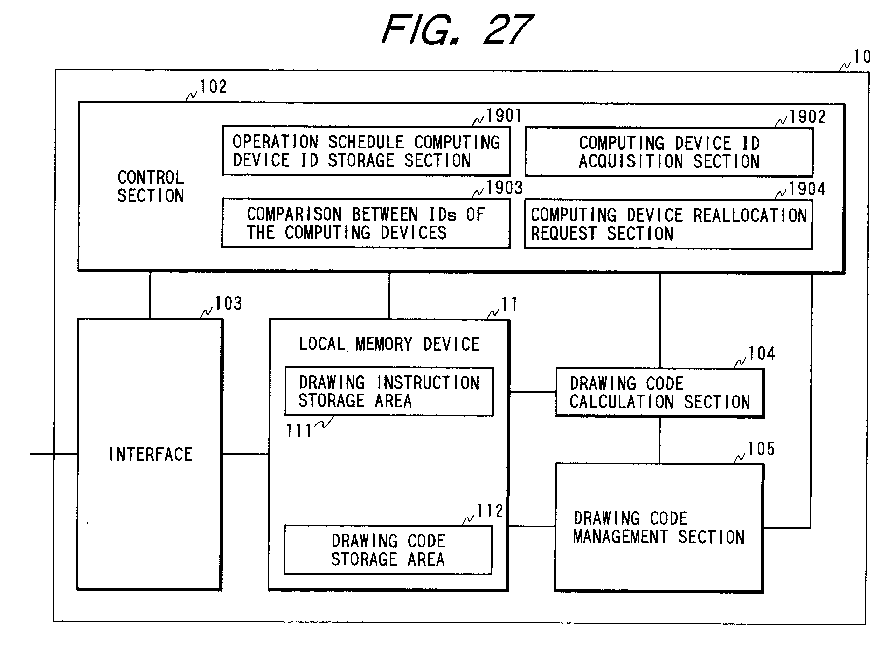

If the present invention is implemented in the form of software to be loaded on a general-purpose multiprocessor system, computing devices which activate the drawing instruction processing sections may be switched to each other rarely during processing. In this case, it is desirable to request reallocation of the computing devices without making access to the drawing code storage area in order to prevent effective data stored in the local memory devices from being wasted. This can be realized by internally providing each drawing instruction processing section 10 with a storage section for storing a numeral capable of specifying a computing device to be operated; a comparison section for comparing the numeral with a numeral obtained from the computing device in operation; and a request section for requesting reallocation of the computing devices if the result of such comparison fails to meet an expected result. Fig. 27 illustrates one example of the configuration of such a drawing instruction processing section.

In Fig. 27, an operation schedule calculation ID storage section 1901, a computing device ID acquisition section 1902, a computing device ID comparison section 1903, and a computing device reallocation request section 1904 are provided in the control section 102. The operations of these sections are easily comprehensible, and hence their explanations will be omitted here.

In the previously-described embodiments, drawing instructions are collectively transferred to drawing processing elements. Then, drawing processing operations are executed in parallel for each smaller drawing area. More specifically, instead of individually sending to the drawing instruction processing elements, a drawing instruction which is constituted for each drawing operation to be executed in parallel, drawing instructions are grouped together in larger blocks, and the thus-grouped drawing instructions are transferred to the drawing instruction processing elements. Then, each of the drawing instruction processing elements performs processing allocated to itself. As a result, the number of transfer of the drawing instructions is considerably reduced, and the parallel processing efficiency can be sufficiently utilized.

The drawing code produced in each drawing instruction processing section in response to the drawing instruction is managed by the drawing code management section, whereby overcoating operations are deleted, and the drawing is optimized. In the conventional technique example disclosed in Unexamined Japanese Patent Application No. Hei-318174, a local bit map is filled every time a drawing element appears. If extremely many drawing elements are overcoated as in the case of expression of color gradation, there arises wait due to the filling of the local bit map, which in turn results in a bottleneck in parallel processing. In the present embodiment, such a problem is also prevented.

As has been described above, in the drawing system which receives data having a description format, such as a PDL which uses a vector and a code, and produces an output to a raster output device, small areas to be drawn are allocated to a plurality of drawing instruction processing sections. A drawing instruction to cover a large drawing area instead of a drawing instruction to cover a small area is used. Therefore, compared with a case where a drawing instruction to cover a small area is individually sent to the drawing instruction sections, transfer traffic is reduced, which in turn prevents a bottleneck in the drawing processing which results from transfer of the drawing instructions. Upon receipt of the drawing instruction to cover a large drawing area, each drawing instruction processing section executes drawing of a small area for which that drawing instruction processing section is responsible. As a result, the drawing operation is effectively distributed to the drawing instruction processing sections, whereby the drawing operations are efficiently carried out. Consequently, parallel processing of the drawing area can be efficiently effected, and hence it is possible to obtain the result of drawing at high speed.

## Claims

1. A drawing processor comprising:
a plurality of drawing instruction processing means having local memory devices;
divided area allocation means for allocating divided areas obtained by dividing a drawing area, to the plurality of drawing instruction processing means in an alternative way, so that the plurality of drawing instruction processing means carry out drawing processing of the allocated divided areas;
drawing instruction generation means for generating a drawing instruction which enables drawing operations capable of covering several divided areas;
means for transferring the drawing instruction to the plurality of drawing instruction processing means; and
means of producing a target image of the drawing instruction by recovering the results of the drawing operations executed by the plurality of drawing instruction processing means.

2. The drawing processor as defined in claim 1, wherein the divided areas are linear.

3. The drawing processor as defined in claim 1, wherein the divided areas are strip-shaped.

4. The drawing processor as defined in claim 1, wherein the divided areas are cyclically allocated to the plurality of drawing instruction processing means in the direction in which the divided areas are arranged.

5. The drawing processor as defined in claim 1, wherein the divided area allocation means stores an allocation table and allocates the divided areas to the plurality of drawing instruction processing means according to the allocation table.

6. The drawing processor as defined in claim 1, wherein each of the plurality of drawing instruction processing means has a clip data storage area for retaining clip data.

7. The drawing processor as defined in claim 1, wherein the plurality of drawing instruction processing means is connected to shared memory, and the local memory devices constitute cache memory for the shared memory.

8. The drawing processor as defined in claim 1, further comprising operation timing control means for shifting operation start timing of the plurality of drawing instruction processing means with respect to each other.

9. The drawing processor as defined in claims 1, wherein each of the plurality of drawing instruction processing means comprises
means for storing an identifier for identifying a computing device which is to process operations of the drawing instruction processing means;
means for comparing the identifier of the computing device which processes the operations of the drawing instruction processing means, with identifiers stored in the storage means; and
means for requesting for reallocation of the computing devices depending on the result of comparison.

10. The drawing processor as defined in claim 1, wherein the results of the drawing operations performed by the plurality of drawing instruction processing means are retained in the form of run-length data.

11. The drawing processor as defined in claim 1, wherein the results of the drawing operations performed by the plurality of drawing instruction processing means are retained in the form of trapezoid.

12. A drawing processor comprising:
a plurality of drawing instruction processing means having local memory devices;
divided area allocation means for allocating divided areas obtained by dividing a drawing area, to the plurality of drawing instruction processing means in an alternative way, so that the plurality of drawing instruction processing means carry out drawing processing of the allocated divided areas;
means for outputting a drawing file;
means for outputting a first drawing instruction after having received the drawing file;
means for converting the first drawing instruction to a plurality of second drawing instructions which, as a whole, are equivalent to the first drawing instruction and enable processing operations capable of covering the plurality of divided areas;
means of simultaneously transferring the plurality of second drawing instructions to the plurality of drawing instruction processing means by one transfer operation;
means of producing target image data of the drawing instruction by recovering the results of the drawing operations executed by the plurality of drawing instruction processing means; and
means for outputting a target image according to the target image data.

13. A drawing processing method which uses a plurality of drawing instruction processing means having local memory devices, the method comprising the steps of:
allocating divided areas obtained by dividing a drawing area, to the plurality of drawing instruction processing means in an alternative way, so that the plurality of drawing instruction processing means carry out drawing processing of the allocated divided areas;
generating a drawing instruction which enables drawing operations capable of covering several divided areas; and
producing a target image of the drawing instruction by recovering the results of the drawing operations executed by the plurality of drawing instruction processing means.

14. The drarwing processor as defined in claim 1, wherein said transferring means transfers the drawing instruction to the plurality of drawing instruction processing means by one transfer operation.

15. The drawing processor as defined in claim 1, wherein the divided area allocation means forms an allocation table and allocates the divided areas to the plurality of drawing instruction processing means according to the allocation table.

16. A drawing processor comprising:
a plurality of drawing instruction processing means having local memory devices;
divided area allocation means for allocating divided areas obtained by dividing a drawing area, to the plurality of drawing instruction processing means in an alternative way, so that the plurality of drawing instruction processing means carry out drawing processing of the allocated divided areas;
drawing instruction generation means for generating a drawing instruction which enables drawing operations capable of covering several divided areas; and
means of producing a target image of the drawing instruction by recovering the results of the drawing operations executed by the plurality of drawing instruction processing means.

17. A drawing processor comprising:
a plurality of drawing instruction processing means having local memory devices;
divided area allocation means for allocating divided areas obtained by dividing a drawing area, to the plurality of drawing instruction processing means in an alternative way, so that the plurality of drawing instruction processing means carry out drawing processing of the allocated divided areas;
drawing instruction generation means for generating a drawing instruction which enables drawing operations capable of covering several divided areas;
means for transferring the drawing instruction to the plurality of drawing instruction processing means by one transfer operation; and
means of producing a target image of the drawing instruction by recovering the results of the drawing operations executed by the plurality of drawing instruction processing means.
